(19) Europäisches Patentamt
European Patent Office
Office européen des brevets

(11) **EP 2 275 838 A2**

(12) **EUROPEAN PATENT APPLICATION**

(43) Date of publication:
**19.01.2011 Bulletin 2011/03**

(51) Int Cl.:
**G01V 3/12** (2006.01)

(21) Application number: **10169699.5**

(22) Date of filing: **15.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **15.07.2009 US 460183**

(71) Applicant: **PGS Geophysical AS**
**1366 Lysaker (NO)**

(72) Inventors:
• **Hobbs, Bruce Alan**
  **Penicuik, EH26 8PN (GB)**
• **Werthmüller, Dieter**
  **CH-5112, Thalheim (CH)**

(74) Representative: **Lord, Michael**
  **Gill Jennings & Every LLP**
  **The Broadgate Tower**
  **20 Primrose Street**
  **London EC2A 2ES (GB)**

(54) **Method for Determining Resistivity Anistropy From Earth Electromagnetic Transient Step Response and Electromagnetic Transient Peak Impulse Response**

(57)     A method for determining resistivity anisotropy of subsurface rock formations includes imparting a transient electromagnetic field into the subsurface rock formations. Electromagnetic response of the formations is measured at a plurality of offsets from a position of the imparting. For each offset, an arrival time from the imparting is determined of a peak of an impulse response such that the response is related to subsurface horizontal and vertical resistivities. For each offset, a step response of the formations is determined at a time from the imparting selected such that the step response is related substantially only to mean resistivity. The arrival time of the peak of the impulse response and the late time value of the step response are used to determine the resistivity anisotropy.

FIG. 1

EP 2 275 838 A2

**Description**

Field of the Invention

The invention relates generally to the field of electromagnetic surveying of formations in the Earth's subsurface. More particularly, the invention relates to methods for determining electrical resistivity anisotropy in subsurface formations using electromagnetic measurements.

Background Art

Electromagnetic surveying is used for, among other purposes, determining the presence of hydrocarbon bearing structures in the Earth's subsurface. Presence of hydrocarbon bearing structures is typically inferred by determining the presence of high resistivity in the subsurface, because high resistivity is associated with subsurface formations having hydrocarbons disposed in the pore spaces therein.

Electromagnetic surveying includes what are called "controlled source" survey techniques. Controlled source electromagnetic surveying techniques include imparting an electric current or a magnetic field into the Earth, when such surveys are conducted on land, or imparting the same into sediments below the water bottom (sea floor) when such surveys are conducted in a marine environment. The techniques include measuring voltages and/or magnetic fields induced in electrodes, antennas and/or magnetometers disposed at the Earth's surface, on the sea floor or at a selected depth in the water. The voltages and/or magnetic fields are induced by interaction of the electromagnetic field caused by the electric current and/or magnetic field imparted into the Earth's subsurface (through the water bottom in marine surveys) with the subsurface Earth formations.

Marine controlled source electromagnetic surveying known in the art includes imparting alternating electric current into the sediments below the water bottom by applying current from a source, usually disposed on a survey vessel, to a bipole electrode towed by the survey vessel. A bipole electrode is typically an insulated electrical cable having two electrodes thereon at a selected spacing, sometimes 300 to 1000 meters or more. The alternating current has one or more selected frequencies, typically within a range of about 0.1 to 100 Hz. A plurality of detector electrodes is disposed on the water bottom at spaced apart locations, and the detector electrodes are connected to devices that record the voltages induced across various pairs of such electrodes. Such surveying is known as frequency domain controlled source electromagnetic surveying.

Another controlled source technique for electromagnetic surveying of subsurface Earth formations known in the art is transient controlled source electromagnetic surveying. In transient controlled source electromagnetic surveying, an electric current or a magnetic field is imparted into the Earth, when such surveys are conducted on land, or is imparted into sediments below the water bottom (sea floor) when such surveys are conducted in a marine environment using electrodes on a cable similar to those explained above as used for frequency domain surveying. The electric current may be direct current (DC). At a selected time or times, the electric current is switched, and induced voltages are measured, typically with respect to time over a selected time interval, using electrodes disposed on land or in the water column or on the water bottom as previously explained with reference to frequency domain surveying. Structure and composition of the Earth's subsurface are inferred by the time and space distribution of the induced voltages. t-CSEM surveying techniques are described, for example, in International Patent Application Publication No. WO 2007/104949 Al entitled, *Optimization of MTEM Parameters.*

One of the specific parameters determined from the time distribution of induced voltages is the electrical resistivity of the subsurface formations. By making suitable spatially distributed electromagnetic response measurements, it is possible to generate a three dimensional image of the spatial distribution of electrical resistivity in the Earth's subsurface.

Techniques known in the art for determining spatial distribution of electrical resistivity using electromagnetic survey measurements typically assume that the electrical resistivity is isotropic, that is, the resistivity is the same in any particular subsurface rock formation irrespective of the direction of electric current flow used to make the measurements. It is known in the art, however that electrical resistivity of some rock formations is anisotropic. Resistivity anisotropy is present in some rock formations in a variety of scales from micro (e.g., grain size pore water connectivity variation) to macro (e.g., laminated sand-shale sequences). See, for example, U.S. Patent No. 6,643,589 issued to Zhang et al. and U.S. Patent No. 7,269,515 issued to Tabarovsky et al. The foregoing two patents describe techniques for determining electrical resistivity and resistivity anisotropy from within wellbores drilled through the subsurface rock formations. However, such techniques are not applicable to use with electromagnetic surveying conducted from above the rock formations of interest. There exists a need for electromagnetic survey techniques that account for resistivity anisotropy.

## Summary of the Invention

A method according to one aspect of the invention for determining resistivity anisotropy of subsurface rock formations includes imparting a transient electromagnetic field into the subsurface rock formations. Electromagnetic response of the formations is measured at a plurality of offsets from a position of the imparting. For each offset, an arrival time from the imparting is determined of a peak of an impulse response such that the response is related to subsurface horizontal and vertical resistivities. For each offset, a step response of the formations is determined at a time from the imparting selected such that the step response is related substantially only to mean resistivity. The arrival time of the peak of the impulse response and the late time value of the step response are used to determine the resistivity anisotropy.

Other aspects and advantages of the invention will be apparent from the description and the claims that follow.

## Brief Description of the Drawings

FIG. 1 shows an example system for acquiring electromagnetic measurements used with the invention.

FIG. 2 shows a three layer model of resistivities of subsurface rock formations having selected anisotropy coefficients.

FIG. 3 shows graphs of apparent anisotropy coefficients with respect to offset for the model formations shown in FIG. 2.

FIG. 4 shows an example late time "step response" of subsurface formations to a transient electromagnetic field.

FIG. 5 shows an example formation impulse response to a transient electromagnetic field.

FIG. 6 shows a programmable computer and computer readable media.

## Detailed Description

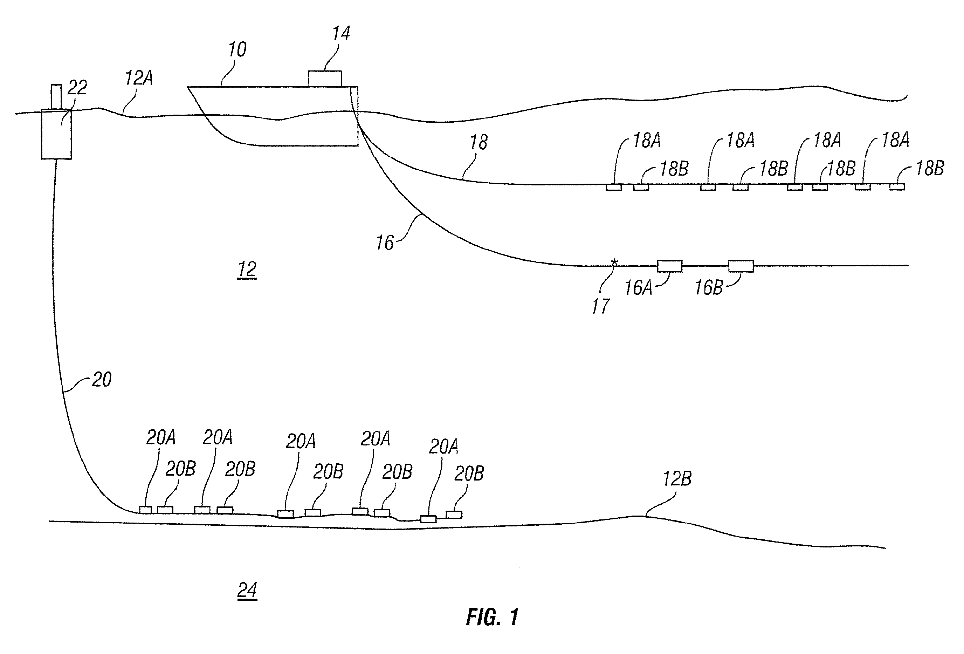

FIG. 1 shows an example marine electromagnetic survey system that may acquire transient controlled source electromagnetic survey signals for processing according to the invention. The survey system may include a survey vessel 10 that moves along the surface 12A of a body of water 12 such as a lake or the ocean. The vessel 10 may include thereon equipment, referred to for convenience as a "recording system" and shown generally at 14, for imparting current or a transmitter for generating electromagnetic fields to be imparted into formations 24 below the bottom of the water 12 and for recording measurements made in response to the imparted electromagnetic fields. The recording system 14 may include (none shown separately for clarity of the illustration) navigation devices to determine the geodetic position of the vessel 10. The vessel 10 may include further equipment for determining geodetic position and/or heading of one or more electromagnetic transmitters and receivers (described below), devices for imparting electric current to the transmitter(s); and data storage equipment for recording signals detected by the one or more electromagnetic receivers.

The electromagnetic transmitter in the present example may be a bipole electrode, shown as a pair of electrodes at 16A, 16B disposed along an electrical cable 16 towed by the vessel 10. At selected times, the recording system 14 may pass electric current through the electrodes 16A, 16B. The current is preferably configured to induce transient electromagnetic fields in the formations 24 below the water bottom 12B. Examples of such current include switched direct current, wherein the current may be switched on, switched off, reversed polarity, or switched in an extended set of switching events, such as a pseudo random binary sequence ("PRBS") or other coded sequence.

In the present example, the vessel 10 may tow one or more receiver cables 18 having thereon a plurality of electromagnetic receivers, such as bipole electrodes 18A, 18B, disposed at spaced apart positions along the cable. The bipole electrodes 18A, 18B will have voltages imparted across them related to the amplitude of the electric field component of the electromagnetic field emanating from the formations 24 in response to the imparted electromagnetic field. The recording system 14 on the vessel 10 may include, as explained above, devices for recording the signals generated by the electrodes 18A, 18B. The recording of each receiver's response is typically indexed with respect to a reference time, such as a current switching event in the transmitter current. A sensor 17 such as a magnetic field sensor (e.g., a magnetometer) or current meter may be disposed proximate the transmitter as shown and may be used to measure a parameter related to the amount of current flowing through the transmitter.

In the present example, in substitution of or in addition to the receiver cable 18 towed by the vessel 10, a water bottom receiver cable 20 may be disposed along the bottom of the water 12, and may include a plurality of receivers such as bipole electrodes 20A, 20B similar in configuration to the bipole electrodes 18A, 18B on the towed cable. The electrodes 20A, 20B may be in signal communication with a recording buoy 22 or similar device either near the water surface 12A or on the water bottom that may record signals detected by the electrodes 20A, 20B.

It will be appreciated by those skilled in the art that the invention is not limited in scope to the transmitter and receiver arrangements shown in FIG. 1. Other examples may use, in substitution of or in addition to the bipole electrodes shown in FIG. 1, wire coils or wire loops for the transmitter to impart a time varying magnetic field into the formations 24. The receiver cables 18, 20 may include other sensing devices, such as magnetometers, wire loops or coils to detect the magnetic field component of the induced electromagnetic field from the formation 24. Irrespective of the type of receiver used in any implementation, the electromagnetic receivers typically generate an electrical or optical signal corresponding to a magnitude of the electromagnetic field parameter being measured or a time derivative thereof.

For purposes of explaining the invention, the electromagnetic receivers may be generally disposed along a common line with the transmitter during signal recording. Recordings of signals from each of the respective receivers may be made with the transmitter disposed at selected locations along the common line and actuated as explained above. The recorded signal corresponding to each electromagnetic receiver will be associated with a distance, called "offset", that is located at the geodetic midpoint between the receiver geodetic position and the geodetic position of the transmitter at the time of signal recording. Thus, signals corresponding to a plurality of offsets may be acquired using a system such as shown in FIG. 1. The purpose for multiple offset recording as it relates to the invention will be further explained below.

As explained in the Background section herein, some formations may be electrically anisotropic, and as a result have anisotropic resistivity. For purposes of the present invention, resistivity anisotropy will be limited to the case of vertically transversely isotropic ("VTI") formations, that is, formations which have a different "vertical" resistivity (e.g., resistivity measured using current flow in a direction perpendicular to the bedding planes of the formation, which may be considered horizontal for explanation purposes) than the "horizontal" resistivity (resistivity measured using current flow in a direction parallel to the bedding planes of the formation). VTI formations are considered to have the same horizontal resistivity irrespective of the azimuthal direction along which the measurement is made. Such formations are also known as having a vertical axis of symmetry. Such resistivity anisotropy is known to have a large influence on the electromagnetic responses of the Earth. In particular, anisotropy affects the Earth's impulse response and its step response. The foregoing responses are determined in transient controlled source electromagnetic survey methods. If the area of the subsurface of interest is electrically anisotropic, and if electromagnetic survey data are treated as isotropic, inversion procedures used to infer the spatial distribution of resistivity will, as explained above, yield incorrect results.

It will be appreciated by those skilled in the art that the Earth's impulse response may be determined by direct measurement after a single transient electromagnetic field is imparted into the formations, or by deconvolution of the electromagnetic receiver measurements by the transmitter current waveform if coded sequences are used, e.g., PRBS, and that the Earth's step response may be determined by integration of the Earth's impulse response thus determined.

In the present invention a late time value of the Earth's step response and an arrival time of the peak of the Earth's impulse response are used to define an apparent anisotropy. To be consistent with the definition of apparent resistivity, apparent anisotropy may be defined as the anisotropy calculated for a general halfspace using equations that define the anisotropy for a uniform halfspace. The apparent anisotropy is then used to determine the resistivity anisotropies of the subsurface formations through an inversion procedure. An explanation of a method according to the invention follows. For an electrically anisotropic layer or halfspace, in which the horizontal resistivity $\rho_h$ is the same in all horizontal directions and where the vertical resistivity $\rho_v$ may differ from the horizontal resistivity (the so-called VTI or vertically transversely isotropic case), the anisotropy coefficient is defined by

$$\lambda = \sqrt{\frac{\rho_v}{\rho_h}} \; . \tag{1}$$

For such a halfspace, an analytic expression for the Earth's impulse response has been derived from which the following equation for the arrival time of the peak of the Earth's impulse response, $T_{peak}$' as a function of $\lambda$ may be deduced:

$$\exp\left\{-\frac{\tau}{T_{peak}}\left(1-\frac{1}{\lambda^2}\right)\right\} = \frac{3\lambda^4 T_{peak}^2 + 8\tau\lambda^2 T_{peak} - 4\tau^2}{\lambda^4 t\left(3T_{peak} - 2\tau\right)} \tag{2}$$

where $\tau = \dfrac{\mu\, r^2}{4\rho_h}$, represents the magnetic permeability of the half space and $r$ represents the offset between transmitter and the particular receiver. B oth the transmitter and the particular receiver are disposed above the halfspace.

It has been determined that for a survey conducted on land (and for a marine survey with the "airwave" effect removed or attenuated) when the subsurface formation is assumed to be a VTI halfspace, then the late time value (t approaches infinity) of the Earth's step response (which is the integral of the impulse response) may be used to determine the geometric mean resistivity, defined by $\rho_m = \sqrt{\rho_v \rho_h}$, using the expression:

$$E_x(r,\infty) = \frac{\rho_m}{\pi\, r^3} \quad , \tag{3}$$

where $E_x(r,t)$ is the Earth's in-line (along the direction of the electric field component of the imparted electromagnetic field) step response for a value of offset $r$ at time $t$.

An exact (numerical) solution for the anisotropy coefficient in a uniform halfspace (i.e., the halfspace has the same properties everywhere), and therefore for the apparent anisotropy in a general VTI halfspace (i.e., the resistivity values can be different at different positions within the halfspace, but the anisotropy is VTI everywhere), can be obtained from equations (2) and (3) using the following technique:

From the late time value of the Earth's step response at a selected offset $r$ use equation (3) to determine the mean resistivity $\rho_m$. From the Earth's impulse response at the same offset determine the peak arrival time $T_{peak}$. Now define a characteristic time:

$$\tau_m = \frac{\tau}{\lambda} = \frac{\mu\, r^2}{4\rho_h \lambda} = \frac{\mu\, r^2}{4\rho_m} , \tag{4}$$

re-write equation (2) in terms of a single unknown $\lambda_{app}$ :

$$\exp\left\{ -\frac{\tau_m}{T_{peak}}\left( \lambda_{app} - \frac{1}{\lambda_{app}} \right) \right\} = \frac{3\lambda_{app}^2 T_{peak}^2 + 8\tau_m \lambda_{app} T_{peak} - 4\tau_m^2}{\lambda_{app}^2 T_{peak}\left( 3T_{peak} - 2\tau_m \lambda_{app} \right)} \tag{5}$$

and solve equation (5) numerically for the apparent anisotropy coefficient $\lambda_{app}$.

There will be a number of empirical formulae that provide various levels of approximation for the apparent anisotropy to that given by equation (5).

A first approximation is as follows. For an electrically isotropic halfspace having a resistivity denoted by p , the arrival time of the peak of the Earth's impulse response after imparting a transient electromagnetic field therein can be determined by the expression:

$$T_{peak}(r) = \frac{\mu r^2}{10\rho} . \tag{6}$$

It has also been determined that the arrival time of the peak of the Earth's impulse response is predominantly dependent on the vertical resistivity and so from Equation (6) to a first approximation:

$$T_{peak}(r) = \frac{\mu r^2}{10\rho_v} \qquad (7)$$

Equations (3) and (7) can be used to define a first approximation $\lambda_{app(1)}$ of the apparent anisotropy according to the expression:

$$\lambda_{app(1)}(r) = \frac{\rho_v}{\rho_m} = \frac{\mu}{10\pi r T_{peak}(r)E_x(r,\infty)}$$

However, a better approximation of the arrival time of the peak of the Earth's impulse response has been derived empirically, and is determined by the expression:

$$T_{peak}(r) = \frac{\mu r^2}{9\rho_v + \rho_h} \qquad (8)$$

A good second approximation of the anisotropy coefficient $\lambda_{app(2)}$ can now be obtained using Equations (3) and (8), with $\rho_v = \rho_m\lambda_{app(2)}$ and $\rho_h = \rho_m / \lambda_{app(2)}$ Then $\lambda_{app(2)}$ satisfies the quadratic equation:

$$9\lambda_{app(2)}^2 - \frac{\mu}{\pi\, r\, E_x(r,\infty)T_{peak}(r)}\lambda_{app(2)} + 1 = 0 \qquad (9)$$

and the larger root of Equation (9) is an appropriate solution. In this approximation, the apparent anisotropy coefficient for any offset $r$ may be defined as:

$$\lambda_{app(2)}(r) = \frac{1}{18\pi\, rE_x(r,\infty)}\left\{\frac{\mu}{T_{peak}(r)} + \sqrt{\frac{\mu^2}{T_{peak}^2(r)} - 36\pi^2 r^2 E_x^2(r,\infty)}\right\}$$

$$(10)$$

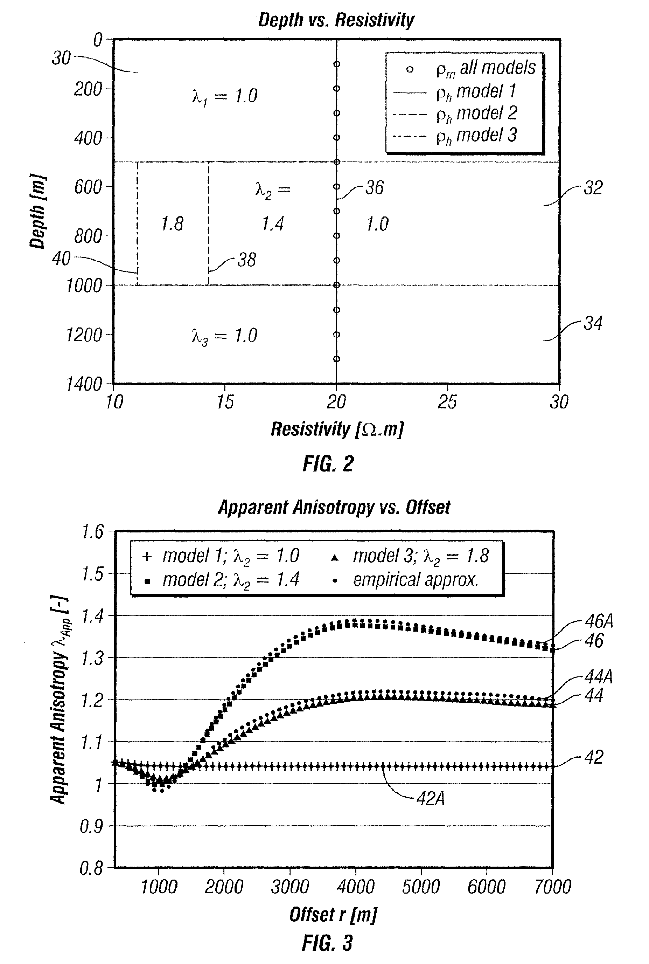

It will be appreciated by those skilled in the art that the invention is not limited to the approximations to the apparent anisotropy given explicitly above.
As the offset increases, the responses of the signals detected by the electromagnetic receivers are influenced to a corresponding extent by deeper sections of the subsurface, and so $\lambda_{app}(r)$ (and its empirical approximations) varies in response to the variation of anisotropy with depth.
To test the above relationships, an isotropic and two anisotropic three-layer model subsurface formations were used, shown graphically in FIG. 2. The anisotropic models differ within the second layer, which has an anisotropy coefficient of 1.4 for the first model and 1.8 for the second model. The mean resistivity of the first layer 30, the second layer 32 and the third layer 34 are all 20 ohm-meters. The horizontal resistivity of the first 30 and third 34 layers are also 20 ohm-meters (and such layers are thus isotropic). In one model, the second layer has an anisotropy coefficient of 1.4, indicated by curve 38. In one model, the second layer has an anisotropy coefficient of 1.8, indicated by curve 40. The isotropic model is shown by curve 36.
The apparent anisotropy with respect to offset for each of the three models of FIG. 2 are shown in FIG. 3. The isotropic case is shown at curve 42. The response of the model having a second layer with anisotropy coefficient 1.4 is shown by curve 44. The response of the model wherein the second layer has anisotropy coefficient of 1.8 is shown at curve 46. For curves 42, 44 and 46 both the exact numerical solution given by the solution of Equation (5) and an approximation obtained empirically using Equation (10) at 42A, 44A and 46A, respectively, are shown. From FIG. 3 it can be observed that $\lambda_{app}(r)$ distinguishes between the foregoing three models of the subsurface.

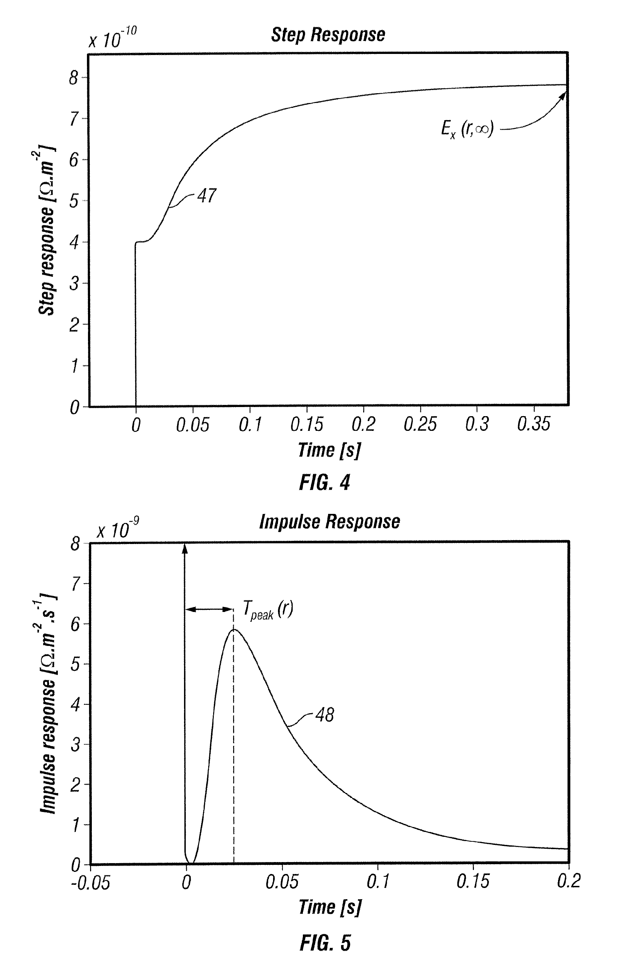

A resistivity and resistivity anisotropy spatial distribution in the Earth's subsurface may determined from measurements made using the system shown in FIG. 1, accounting for anisotropy as explained above, using inversion. The apparent anisotropy variation with respect to offset explained above may be used firstly to select initial values of anisotropy coefficients (using for example an empirical relation for offset to depth) and secondly as a constraint on values of anisotropy coefficients determined in resistivity inversion. At each iterative step in the resistivity inversion, layer resistivities $\rho_h$ and $\rho_v$ are determined and "forward modeling" (calculation of the expected step response and impulse response to the model) determines $\lambda_{app}^{calc}(r)$. The foregoing calculated value of apparent anisotropy coefficient is compared to $\lambda_{app}^{meas}(r)$ and the misfit may be used to update the anisotropy values in each layer. Determining the subsurface resistivity structure according to one example of a method includes the following. Obtain electromagnetic step and impulse responses at a plurality of offsets by imparting electromagnetic fields into the subsurface and measuring responses thereto as explained with reference to FIG. 1. For each step response of the form shown by curve 47 in FIG 4, i.e., and for each offset $r$, determine the amplitude of the step response, as shown at late time $E_x(r,\infty)$ in FIG. 4. Then, for each impulse response of the form shown at curve 48 in FIG. 5, i.e., for each offset $r$, determine the time interval between the initiation of the transient electromagnetic field (time zero) and the peak response, $T_{peak}(r)$. The apparent anisotropy $\lambda_{app}(r)$ may then be computed using Equations (5), (7) or (9) or any other approximation derived from the Earth's late time step response and peak arrival time of the Earth's impulse response. Anisotropy values in each layer of the model of the Earth's subsurface may then be updated to minimize the misfit between calculated and measured apparent anisotropy.

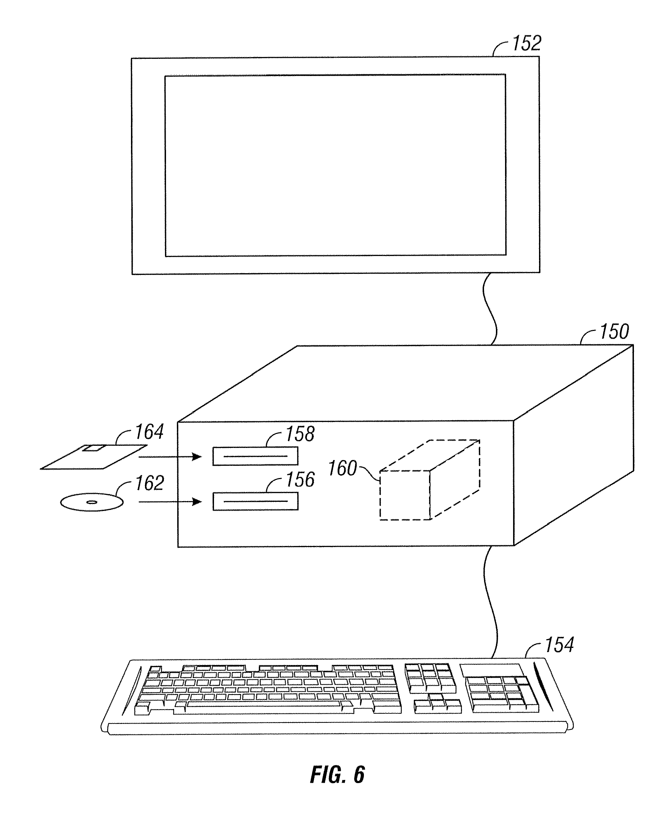

In another aspect, the invention relates to computer programs stored in computer readable media. Referring to FIG. 6, the foregoing process as explained with reference to FIGS 1-5, can be embodied in computer-readable code. The code can be stored on a computer readable medium, such as floppy disk 164, CD-ROM 162 or a magnetic (or other type) hard drive 166 forming part of a general purpose programmable computer. The computer, as known in the art, includes a central processing unit 150, a user input device such as a keyboard 154 and a user display 152 such as a flat panel LCD display or cathode ray tube display. The computer may form part of the recording unit (14 in FIG. 1) or may be another computer. According to this aspect of the invention, the computer readable medium includes logic operable to cause the computer to execute acts as set forth above and explained with respect to the previous figures.

Methods according to the invention may provide images of electrical resistivity of subsurface rock formations that include the effects of resistivity anisotropy using transient electromagnetic survey measurements.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

**Claims**

1.  A method for determining resistivity anisotropy of subsurface rock formations, comprising:

    imparting a transient electromagnetic field into the subsurface rock formations;
    measuring electromagnetic response of the formations at a plurality of offsets from a position of the imparting;
    for each offset, determining an arrival time from the imparting of a peak of an impulse response such that the response is related to subsurface horizontal and vertical resistivities;
    for each offset, determining a step response of the formations at a time from the imparting selected such that the step response is related substantially only to mean resistivity; and
    using the arrival time of the peak of the impulse response and the late time value of the step response to determine the resistivity anisotropy.

2.  The method of claim 1 wherein the imparting comprises passing electric current through a transmitter, the current comprising at least one of switching current on, switching current off, reversing current polarity and switching current in a coded sequence.

3.  The method of claim 1 further comprising:

(a) generating an initial model of the subsurface formations using the determined resistivity anisotropy, the initial model including a value of horizontal resistivity and a value of vertical resistivity for at least one layer using an empirical relationship of offset with respect to depth;

(b) calculating a step response and an impulse response for the model for a plurality of offsets;

(c) estimating a late time value of the step response and an arrival time of the peak of the impulse response for each offset from the calculated step response and the calculated impulse response and using the estimated late time value from the calculated step response and the estimated arrival time of the peak of the impulse response from the calculated impulse response to determine a calculated apparent anisotropy;

(d) comparing the apparent anisotropy determined from the measured electromagnetic response with the calculated apparent anisotropy; and

(e) adjusting the initial model and repeating (b), (c), and (d) until differences between the determined apparent anisotropy and the calculated apparent anisotropy reach a minimum or fall below a selected threshold.

4. A method for determining resistivity anisotropy in subsurface formations using electromagnetic measurements made in response to imparting a transient electromagnetic field into the subsurface formations, the measurements made at a plurality of offsets from a position at which the electromagnetic field was imparted, the method comprising:

determining a step response of the formations from the electromagnetic measurements at a time from the imparting selected such that the step response is related substantially only to mean resistivity of the formations; determining a time from the imparting of arrival of a peak of an impulse response from the electromagnetic measurements such that the arrival time is related to horizontal and vertical resistivity of the formations; and using the step response and the impulse response peak arrival time to determine the resistivity anisotropy.

5. The method of claim 4 further comprising:

(a) generating an initial model of the subsurface formations using the determined resistivity anisotropy, the initial model including a value of horizontal resistivity and a value of vertical resistivity for at least one layer using an empirical relationship of offset with respect to depth;

(b) calculating a step response and an impulse response for the model for a plurality of offsets;

(c) estimating a late time value of the step response and an arrival time of the peak of the impulse response for each offset from the calculated step response and the calculated impulse response and using the estimated late time value from the calculated step response and the estimated arrival time of the peak of the impulse response from the calculated impulse response to determine a calculated apparent anisotropy;

(d) comparing the resistivity anisotropy determined from the electromagnetic measurements with the calculated apparent anisotropy; and

(e) adjusting the initial model and repeating (b), (c), and (d) until differences between the determined resistivity anisotro py and the calculated apparent anisotropy reach a minimum or fall below a selected threshold.

6. The method of claim 4 wherein the electromagnetic field is imparted by passing electric current through a transmitter, the current comprising at least one of switching current on, switching current off, reversing current polarity and switching current in a coded sequence.

7. The method of claim 1 or claim 4 wherein the determining step response comprises determining impulse response and integrating the impulse response.

8. The method of claim 7 wherein the determining impulse response comprises deconvolving the measured electromagnetic response with a waveform of an electric current used to impart the electromagnetic field.

9. The method of claim 1 or claim 4 wherein the measured electromagnetic response comprises measurements of voltages imparted across pairs of electrodes.

10. A computer program stored in a computer readable medium, the program having logic operable to cause a programmable computer to perform steps comprising:

reading as input electromagnetic measurements made in response to imparting a transient electromagnetic field into the subsurface formations, the measurements made at a plurality of offsets from a position at which the electromagnetic field was imparted; determining a step response of the formations from the input electromagnetic measurements at a time from the imparting selected such that the step response is related substantially only to mean resistivity of the formations; determining a time from the imparting of arrival of a peak of an impulse response from the electromagnetic measurements such that the arrival time is related to horizontal and vertical resistivity of the formations; and using the step response and the impulse response peak arrival time to determine the resistivity anisotropy.

11. The computer program of claim 10 further comprising logic operable to cause the computer to perform:

(a) generating an initial model of the subsurface formations using the determined resistivity anisotropy, the initial model including a value of horizontal resistivity and a value of vertical resistivity for at least one layer using an empirical relationship of offset with respect to depth;
(b) calculating a step response and an impulse response for the model for a plurality of offsets;
(c) estimating a late time value of the step response and an arrival time of the peak of the impulse response for each offset from the calculated step response and the calculated impulse response and using the estimated late time value from the calculated step response and the estimated arrival time of the peak of the impulse response from the calculated impulse response to determine a calculated apparent anisotropy;
(d) comparing the resistivity anisotropy determined from the electromagnetic measurements with the calculated apparent anisotropy; and
(e) adjusting the initial model and repeating (b), (c), and (d) until differences between the determined resistivity anisotropy and the calculated apparent anisotropy reach a minimum or fall below a selected threshold.

12. The computer program of claim 10 wherein the electromagnetic field is imparted by passing electric current through a transmitter, the current comprising at least one of switching current on, switching current off, reversing current polarity and switching current in a coded sequence.

13. The computer program of claim 12 wherein the determining step response comprises determining impulse response and integrating the impulse response.

14. The computer program of claim 13 wherein the determining impulse response comprises deconvolving the measured electromagnetic response with a waveform of an electric current used to impart the electromagnetic field.

15. The computer program of claim 10 wherein the input measured electromagnetic response comprises measurements of voltages imparted across pairs of electrodes.

FIG. 1

**Depth vs. Resistivity**

FIG. 2

**Apparent Anisotropy vs. Offset**

FIG. 3

# Step Response

**FIG. 4**

# Impulse Response

**FIG. 5**

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007104949 A1
- US 6643589 B, Zhang
- US 7269515 B, Tabarovsky